(19) Europäisches Patentamt
European Patent Office
Office européen des brevets

(11) EP 3 778 774 B1

(12) **EUROPEAN PATENT SPECIFICATION**

(45) Date of publication and mention of the grant of the patent:
**04.09.2024 Bulletin 2024/36**

(21) Application number: **19796703.7**

(22) Date of filing: **17.04.2019**

(51) International Patent Classification (IPC):
***C08L 69/00*** *(2006.01)* ***C08L 83/04*** *(2006.01)*
***C08L 83/10*** *(2006.01)* ***C08K 5/521*** *(2006.01)*
***C08K 3/013*** *(2018.01)* ***C08K 5/00*** *(2006.01)*

(52) Cooperative Patent Classification (CPC):
(C-Sets available)
**C08L 69/00;** C08G 77/04; C08G 77/448;
C08K 2003/387; C08L 2201/02; C08L 2205/03

(Cont.)

(86) International application number:
**PCT/KR2019/004612**

(87) International publication number:
**WO 2019/212171 (07.11.2019 Gazette 2019/45)**

(54) **POLYCARBONATE RESIN COMPOSITION AND MOLDED ARTICLE FORMED THEREFROM**

THERMOPLASTISCHE HARZZUSAMMENSETZUNG UND DARAUS HERGESTELLTER FORMARTIKEL

COMPOSITION DE RÉSINE DE POLYCARBONATE ET ARTICLE MOULÉ FORMÉ À PARTIR DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.04.2018 KR 20180049555**

(43) Date of publication of application:
**17.02.2021 Bulletin 2021/07**

(73) Proprietor: **Lotte Chemical Corporation**
**Seoul, 05551 (KR)**

(72) Inventors:
- **JEONG, Hyuk Jin**
  **Uiwang-Si Gyeonggi-do 16073 (KR)**
- **KOO, Ja Kwan**
  **Uiwang-Si Gyeonggi-do 16073 (KR)**
- **LEE, Woo Jin**
  **Uiwang-Si Gyeonggi-do 16073 (KR)**
- **KANG, Tae Gon**
  **Uiwang-Si Gyeonggi-do 16073 (KR)**

(74) Representative: **Germain Maureau**
**12, rue Boileau**
**69006 Lyon (FR)**

(56) References cited:
**WO-A1-2017/042271** **WO-A1-2017/042271**
**KR-A- 20000 060 307** **KR-A- 20140 075 517**
**KR-A- 20150 013 758** **KR-A- 20160 079 786**
**US-A1- 2013 313 493** **US-A1- 2017 037 245**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 69/00, C08K 3/346, C08K 3/38, C08K 5/523,
C08L 83/04, C08L 83/10**

## Description

[Technical Field]

The present invention relates to a polycarbonate resin composition and a molded article formed therefrom. More particularly, the present invention relates to a polycarbonate resin composition, which has good properties in terms of flame retardancy, low heat generation characteristics, flame propagation characteristics, low flammability, and the like, and does not have smoke toxicity, and a molded article formed therefrom.

[Background Art]

Conventionally, steel materials are generally used as interior and exterior material for transportation equipment, such as automobiles, trains, and the like. However, as the need for improvement in fuel efficiency has increased in recent years, studies on replacement of the steel materials with lightweight plastic materials have been actively carried out. Materials for transportation equipment are strictly required to have low flammability and flame retardancy, which can prevent or reduce generation of smoke in the event of a fire, low heat generation characteristics, smoke toxicity, and the like in order to ensure passenger safety.

With good properties in terms of formability, mechanical properties such as impact resistance and tensile strength, electric properties, transparency, and the like, a polycarbonate resin is broadly used in automobiles and electronic products. Conventionally, a polycarbonate resin composition prepared by blending an acrylonitrile-butadiene-styrene (ABS) resin with the polycarbonate resin and adding a phosphorus flame retardant to the mixture is generally used. Despite good properties in terms of formability, heat resistance, moisture proofing, impact resistance and flame retardancy, such a polycarbonate resin composition is not suitable for materials for transportation equipment due to generation of an excess of smoke upon combustion. Thus, a polyimide resin or a polyamide resin is generally used in the field of materials for transportation equipment. However, the polyimide resin or the polyamide resin has disadvantages, such as high price, poor formability, and poorer mechanical properties than polycarbonate resins.

Therefore, there is a need for a polycarbonate resin composition that has good properties in terms of flame retardancy, low heat generation characteristics, flame propagation characteristics, and low flammability, and does not have smoke toxicity, while maintaining good impact resistance, heat resistance and formability of the polycarbonate resin.

The background technique of the present invention is disclosed in Korean Patent Laid-open Publication No. 10-2012-00785 59, US 2013/313493 A1 and WO 2017/042271 A1.

[Disclosure]

[Technical Problem]

It is one aspect of the present invention to provide a polycarbonate resin composition as claimed in any one of claims 1 to 12 that has good properties in terms of flame retardancy, low heat generation characteristics, flame propagation characteristics, low flammability, and the like, and does not have smoke toxicity.

It is another aspect of the present invention to provide a molded product as claimed in claim 13 formed from the polycarbonate resin composition as claimed in any one of claims 1 to 12.

The above and other aspects of the present invention can be achieved by the present invention described below.

[Technical Solution]

One aspect of the present invention relates to a polycarbonate resin composition. The polycarbonate resin composition comprises: 100 parts by weight of a base resin comprising 70 wt% to 90 wt% of a polycarbonate resin and 10 wt% to 30 wt% of a polysiloxane-polycarbonate copolymer resin; 1 part by weight to 30 parts by weight of silicone gum; 1 part by weight to 20 parts by weight of an inorganic metal compound; 5 parts by weight to 30 parts by weight of a phosphorus flame retardant; 10 parts by weight to 60 parts by weight of and inorganic fillers, wherein the silicone gum and the inorganic metal compound are present in a weight ratio (silicone gum:inorganic metal compound) of 0.5:1 to 1.5:1.

The polysiloxane-polycarbonate copolymer resin may be prepared through reaction of a siloxane compound represented by Formula 1, an aromatic dihydroxy compound, and a carbonate precursor:

[Formula 1]

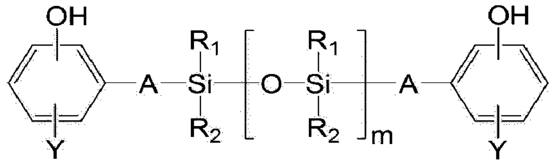

where $R_1$ and $R_2$ are each independently a $C_1$ to $C_{10}$ alkyl group, a $C_6$ to $C_{18}$ aryl group, or a halogen atom or alkoxy group-containing $C_1$ to $C_{10}$ alkyl group or $C_6$ to $C_{18}$ aryl group; As are each independently a substituted or unsubstituted $C_2$ to $C_{20}$ hydrocarbon group, or a substituted or unsubstituted $C_2$ to $C_{20}$ hydrocarbon group having -O- or -S-; Ys are each independently a hydrogen atom, a halogen atom, a $C_1$ to $C_{18}$ halogenated alkyl group, a cyano group (-CN), or an ester group; and m is an integer of about 2 to about 1,000.

The silicone gum may be a polysiloxane resin represented by Formula 2 and have a weight average molecular weight of about 400,000 g/mol to about 1,000,000 g/mol and a viscosity of about 10,000 to about 60,000 $mm^2/s$, as measured at 25°C using a Brookfield viscometer:

[Formula 2]

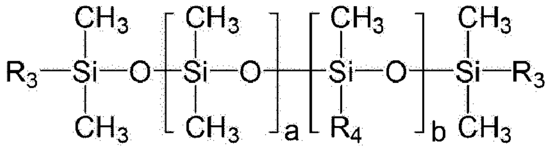

where $R_3$ is a methyl group, a vinyl group or a hydroxyl group, $R_4$ is a methyl group or a vinyl group, and a and b are a mole ratio of 1 to 99 and a mole ratio of 1 to 99, respectively.

The inorganic metal compound may comprise at least one of zinc borate, zinc borate hydrate, aluminum hydroxide, magnesium hydroxide, calcium hydroxide, zinc sulfide, zinc oxide, titanium oxide, magnesium calcium carbonate, magnesium carbonate, calcium carbonate, and magnesium sulfate hydrate.

The phosphorus flame retardant may comprise about 50 wt% to about 70 wt% of bisphenol-A bis(diphenyl phosphate) and about 30 wt% to about 50 wt% of biphenol bis(diphenyl phosphate).

The inorganic fillers may comprise flake inorganic fillers.

The polycarbonate resin composition may have a flame retardancy of V-0 or higher, as measured on a 0.75 mm thick specimen in accordance with a UL-94 vertical test method.

The polycarbonate resin composition may have a maximum average rate of heat emission (MARHE) of about 50 $kW/m^2$ to about 90 $kW/m^2$, as measured on specimens having sizes of 100 mm × 100 mm × 2 to 4 mm at a heat quantity of 50 $kW/m^2$ in accordance with ISO 5660-1.

The polycarbonate resin composition may have a critical heat flux at extinguishment (CFE) of about 18 $kW/m^2$ to about 30 $kW/m^2$, as measured on specimens having sizes of 800 mm × 150 mm × 2 to 4 mm at a heat quantity of 50 $kW/m^2$ in accordance with the ISO 5658-2 standard.

The polycarbonate resin composition may have a specific optical density at 4 min (Ds(4)) of about 90 to about 300, as measured on specimens having sizes of 75 mm × 75 mm × 2 to 4 mm at a heat quantity of 25 $kW/m^2$ in accordance with the ISO 5659-2 standard.

The polycarbonate resin composition may have a cumulative value of specific optical densities in the fires 4 min of the test (VOF(4)) of about 110 min to about 600 min, as measured on specimens having sizes of 75 mm × 75 mm × 2 to 4 mm at a heat quantity of 25 $kW/m^2$ in accordance with the ISO 5659-2 standard.

The polycarbonate resin composition may have a conventional index of toxicity (CIT) of about 0.005 to about 0.9, as measured on specimens having sizes of 75 mm × 75 mm × 2 to 4 mm at a heat quantity of 25 $kW/m^2$ in accordance with the ISO 5659-2 standard.

Another aspect of the present invention relates to a molded article formed of the polycarbonate resin composition according to any one of claims 1 to 12.

[Advantageous Effects]

The present invention provides a polycarbonate resin composition that has good properties in terms of flame retardancy, low heat generation characteristics, flame propagation characteristics, low flammability, and the like, and

does not have smoke toxicity, and a molded article formed of the same.

[Best Mode]

Hereinafter, embodiments of the present invention will be described in detail.
A thermoplastic resin composition according to the present invention comprises: (A) a polycarbonate resin; (B) a polysiloxane-polycarbonate copolymer resin; (C) silicone gum; (D) an inorganic metal compound; (E) a phosphorus flame retardant; and (F) inorganic fillers.
As used herein to represent a specific numerical range, the expression "a to b" means "$\geq$ a and $\leq$ b".

(A) Polycarbonate resin

The polycarbonate resin according to one embodiment of the present invention may comprise any typical polycarbonate resin used for thermoplastic resin compositions. For example, the polycarbonate resin may be an aromatic polycarbonate resin prepared by reacting diphenols (aromatic diol compounds) with a precursor, such as phosgene, halogen formate, carbonate diester, and the like.
In some embodiments, the diphenols may comprise, for example, 4,4'-biphenol, 2,2-bis(4-hydroxyphenyl)propane, 2,4-bis(4-hydroxyphenyl)-2-methylbutane, 1,1-bis(4-hydroxyphenyl)cyclohexane, 2,2-bis(3-chloro-4-hydroxyphenyl)propane, 2,2-bis(3,5-dichloro-4-hydroxyphenyl)propane, 2,2-bis(3-methyl-4-hydroxyphenyl)propane, and 2,2-bis(3,5-dimethyl-4-hydroxyphenyl)propane, without being limited thereto. For example, the diphenols may be 2,2-bis(4-hydroxyphenyl)propane, 2,2-bis(3,5-dichloro-4-hydroxyphenyl)propane, 2,2-bis(3-methyl-4-hydroxyphenyl)propane, 2,2-bis(3,5-dimethyl-4-hydroxyphenyl)propane, or 1,1-bis(4-hydroxyphenyl)cyclohexane, specifically 2,2-bis(4-hydroxyphenyl)propane, which is also referred to as bisphenol-A.
In some embodiments, the carbonate precursor may comprise dimethyl carbonate, diethyl carbonate, dibutyl carbonate, dicyclohexyl carbonate, diphenyl carbonate, ditolyl carbonate, bis(chlorophenyl) carbonate, m-cresyl carbonate, dinaphthyl carbonate, carbonyl chloride (phosgene), diphosgene, triphosgene, carbonyl bromide, and bishaloformate. These may be used alone or as a mixture thereof.
The polycarbonate resin may be a branched polycarbonate resin. For example, the polycarbonate resin may be prepared by adding about 0.05 mol% to about 2 mol% of a tri- or higher polyfunctional compound, specifically a tri- or higher valent phenol group-containing compound, based on the total number of moles of the diphenols used in polymerization.
The polycarbonate resin may be a homopolycarbonate resin, a copolycarbonate resin, or a blend thereof. In addition, the polycarbonate resin may be partly or completely replaced by an aromatic polyester-carbonate resin obtained by polymerization in the presence of an ester precursor, for example, a bifunctional carboxylic acid.
In some embodiments, the polycarbonate resin may have a weight average molecular weight (Mw) of about 10,000 g/mol to about 200,000 g/mol, for example, about 15,000 g/mol to about 40,000 g/mol, as measured by gel permeation chromatography (GPC). Within this range, the thermoplastic resin composition can have good properties in terms of impact resistance, stiffness, heat resistance, and the like.
In the present invention, the polycarbonate resin is present in an amount of about 70 wt% to about 90 wt%, for example, about 75 wt% to about 85 wt%, based on 100 wt% of a base resin (A+B) comprising (A) the polycarbonate resin and (B) the polysiloxane-polycarbonate copolymer resin. Within this range, the polycarbonate resin composition can exhibit good impact resistance, heat resistance, formability (flowability), and the like.

(B) Polysiloxane-polycarbonate copolymer resin

The polysiloxane-polycarbonate copolymer resin according to one embodiment of the invention serves to improve impact resistance, flame retardancy, and weather resistance of the polycarbonate resin composition, and may comprise a polycarbonate block and a polysiloxane block. For example, the polysiloxane-polycarbonate copolymer resin may be a triblock copolymer of polycarbonate/polysiloxane/polycarbonate blocks, without being limited thereto. For example, the polysiloxane-polycarbonate copolymer resin may be prepared by reacting a siloxane compound represented by Formula 1, an aromatic dihydroxy compound, and a carbonate precursor.
[Formula 1]

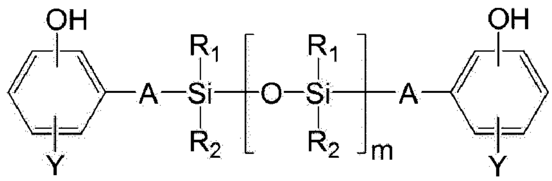

where $R_1$ and $R_2$ are each independently a $C_1$ to $C_{10}$ alkyl group, a $C_6$ to $C_{18}$ aryl group, or a halogen atom or alkoxy group-containing $C_1$ to $C_{10}$ alkyl group or $C_6$ to $C_{18}$ aryl group; As are each independently a substituted or unsubstituted $C_2$ to $C_{20}$ hydrocarbon group, or a substituted or unsubstituted $C_2$ to $C_{20}$ hydrocarbon group having -O- or -S-; Ys are each independently a hydrogen atom, a halogen atom, a $C_1$ to $C_{18}$ halogenated alkyl group, a cyano group (-CN), or an ester group; and m is an integer of about 2 to about 1,000, for example, about 4 to about 120, specifically about 10 to about 100.

In some embodiments, the aromatic dihydroxy compound (diphenols) may be an aromatic dihydroxy compound used in preparation of a typical polycarbonate resin, and may comprise, for example, 4,4'-biphenol, 2,2-bis(4-hydroxyphenyl)propane, 2,4-bis(4-hydroxyphenyl)-2-methylbutane, 1,1-bis(4-hydroxyphenyl)cyclohexane, 2,2-bis(3-chloro-4-hydroxyphenyl)propane, and 2,2-bis(3,5-dichloro-4-hydroxyphenyl)propane, without being limited thereto. Specifically, the aromatic dihydroxy compound may be 2,2-bis(4-hydroxyphenyl)propane, 2,2-bis(3,5-dichloro-4-hydroxyphenyl)propane, or 1,1-bis(4-hydroxyphenyl)cyclohexane, preferably 2,2-bis(4-hydroxyphenyl)propane, which is also referred to as bisphenol A.

In some embodiments, the carbonate precursor may comprise phosgene, triphosgene, diaryl carbonate, and mixtures thereof. Examples of the diaryl carbonate may comprise diphenyl carbonate, ditolyl carbonate, bis(chlorophenyl) carbonate, m-cresyl carbonate, dinaphthyl carbonate, bis(diphenyl) carbonate, diethyl carbonate, dimethyl carbonate, dibutyl carbonate, and dicyclohexyl carbonate, without being limited thereto. These may be used alone or as a mixture thereof. For example, diphenyl carbonate may be used.

In some embodiments, the polycarbonate-polysiloxane copolymer may comprise about 10 wt% to about 99 wt%, for example, about 50 wt% to about 95 wt%, of the polycarbonate block derived from the aromatic dihydroxy compound, and about 1 wt% to about 90 wt%, for example, about 5 wt% to about 50 wt%, of the polysiloxane block derived from the siloxane compound. Within this range, the thermoplastic resin composition can exhibit good impact resistance, flame retardancy, weather resistance, and the like.

In some embodiments, the polycarbonate-polysiloxane copolymer may have a weight average molecular weight (Mw) of about 10,000 g/mol to about 50,000 g/mol, for example, about 15,000 g/mol to about 30,000 g/mol, as measured by gel permeation chromatography (GPC). In addition, the polycarbonate-polysiloxane copolymer may have a melt-flow index (MI) of about 5 g/10 min to about 40 g/10 min, for example, about 10 g/10 min to about 30 g/10 min, as measured under conditions of 300°C and a load of 1.2 kg in accordance with ISO 1133. Within this range, the thermoplastic resin composition can have good mechanical properties, injection flowability, and balance therebetween.

In some embodiments, the polycarbonate-polysiloxane copolymer may be prepared by a typical method. For example, the aromatic dihydroxy compound, the carbonate precursor, and the siloxane compound may be prepared through interface copolymerization, emulsion polymerization, and the like. Alternatively, the polycarbonate-polysiloxane copolymer may be obtained from commercially available products.

In the present invention, the polysiloxane-polycarbonate copolymer resin is present in an amount of about 10 wt% to about 30 wt%, for example, about 15 wt% to about 25 wt%, based on 100 wt% of a base resin (A+B) comprising (A) the polycarbonate resin and (B) the polysiloxane-polycarbonate copolymer resin. Within this range, the polycarbonate resin composition can exhibit good properties in terms of impact resistance, flame retardancy, weather resistance, and the like.

(C) Silicone gum

The silicone gum according to one embodiment of the invention serves to improve flame retardancy, low heat generation characteristics, low flammability, flame propagation characteristics and the like of the polycarbonate resin composition together with the inorganic metal compound, and may be a polysiloxane resin represented by Formula 2.

[Formula 2]

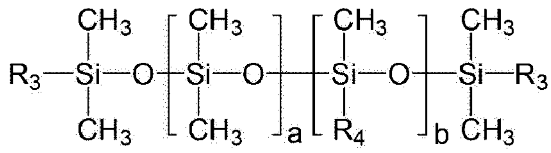

where $R_3$ is a methyl group, a vinyl group or a hydroxyl group, $R_4$ is a methyl group or a vinyl group, and a and b are a mole ratio of 1 to 99 and a mole ratio of 1 to 99, for example, a mole ratio of 10 to 90 and a mole ratio of 10 to 90, respectively.

In some embodiments, the silicone gum may have a weight average molecular weight (Mw) of about 400,000 g/mol to about 1,000,000 g/mol, for example, about 450,000 g/mol to about 900,000 g/mol, as measured by gel permeation chromatography (GPC). Within this range, the polycarbonate resin composition can have good properties in terms of flame retardancy, low heat generation characteristics, low flammability, flame propagation characteristics, and the like.

In some embodiments, the silicone gum may have a viscosity of about 10,000 $mm^2/s$ to about 60,000 $mm^2/s$ (centistoke), for example, about 30,000 $mm^2/s$ to about 50,000 $mm^2/s$, as measured at 25°C using a Brookfield viscometer. Within this range, the polycarbonate resin composition can have good properties in terms of flame retardancy, low heat generation characteristics, low flammability, flame propagation characteristics, and the like.

In the present invention, the silicone gum is present in an amount of about 1 part by weight to about 30 parts by weight, for example, about 5 parts by weight to about 20 parts by weight, relative to about 100 parts by weight of the polycarbonate resin. Within this range, the polycarbonate resin composition can have good properties in terms of flame retardancy, low heat generation characteristics, low flammability, flame propagation characteristics, and the like.

(D) Inorganic metal compound

The inorganic metal compound according to one embodiment of the invention serves to improve flame retardancy, low heat generation characteristics, flame propagation characteristics, and low flammability of the polycarbonate resin composition together with the silicone gum, and may comprise zinc borate, zinc borate hydrate, aluminum hydroxide, magnesium hydroxide, calcium hydroxide, zinc sulfide, zinc oxide, titanium oxide, magnesium calcium carbonate, magnesium carbonate, calcium carbonate, magnesium sulfate hydrate, and combinations thereof. For example, the inorganic metal compound may comprise zinc borate, zinc borate hydrate, and combinations thereof.

In some embodiments, the inorganic metal compound may have various shapes and sizes. For example, the inorganic metal compound may have an average particle diameter (D50) of about 1 μm to about 150 μm, for example, about 3 μm to about 15 μm, as measured by a laser diffraction particle size measurement method.

In the present invention, the inorganic metal compound is present in an amount of about 1 part by weight to about 20 parts by weight, for example, about 5 parts by weight to about 15 parts by weight, relative to about 100 parts by weight of the polycarbonate resin. Within this range, the polycarbonate resin composition can exhibit good properties in terms of flame retardancy, low heat generation characteristics, low flammability, flame propagation characteristics, and the like.

In the present invention, (C) the silicone gum and (D) the inorganic metal compound is present in a weight ratio (C:D) of about 0.5:1 to about 1.5:1. Within this range, the polycarbonate resin composition can exhibit good properties in terms of flame retardancy, low heat generation characteristics, low flammability, flame propagation characteristics, and the like.

(E) Phosphorus flame retardant

The phosphorus flame retardant according to one embodiment of the invention may comprise any typical phosphorus flame retardant used in typical flame retardant thermoplastic resin compositions. For example, the phosphorus flame retardant may comprise a phosphate compound, a phosphonate compound, a phosphinate compound, a phosphine oxide compound, a phosphazene compound, and a metal salt thereof. These compounds may be used alone or as a mixture thereto. Specifically, the phosphorus flame retardant may comprise an aromatic phosphoric ester compound represented by Formula 3.

[Formula 3]

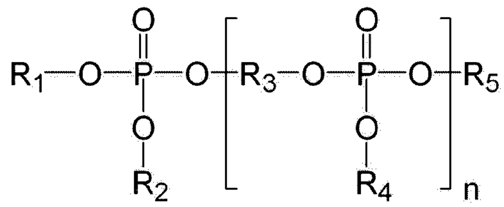

where $R_1$, $R_2$, $R_4$ and $R_5$ are each independently a hydrogen atom, a $C_6$ to $C_{20}$ aryl group, or a $C_1$ to $C_{10}$ alkyl group-substituted $C_6$ to $C_{20}$ aryl group; $R_3$ is a $C_6$ to $C_{20}$ arylene group or a $C_1$ to $C_{10}$ alkyl group-substituted $C_6$ to $C_{20}$ arylene group, for example, derivatives of a dialcohol, such as resorcinol, hydroquinone, bisphenol-A, or bisphenol-S; and n is an integer of 0 to 4.

In some embodiments, when n is 0 in Formula 1, examples of the aromatic phosphoric ester compound may comprise diaryl phosphates, triphenyl phosphate, tricresyl phosphate, trixylenyl phosphate, tri(2,6-dimethylphenyl)phosphate, tri(2,4,6-trimethylphenyl)phosphate, tri(2,4-di-tert-butylphenyl)phosphate, and tri(2,6-dimethylphenyl)phosphate; and when n is 1 in Formula 1, examples of the aromatic phosphoric ester compound may comprise bisphenol-A bis(diphenyl phosphate), bisphenol bis(diphenyl phosphate), resorcinol bis(diphenyl phosphate), resorcinol bis[bis(2,6-dimethylphenyl)phosphate], resorcinol bis[bis(2,4-di-tert-butylphenyl)phosphate], hydroquinone bis[bis(2,6-dimethylphenyl)phosphate], and hydroquinone bis[bis(2,4-di-tert-butylphenyl)phosphate], without being limited thereto. These the aromatic phosphoric ester compounds may be used alone or as a mixture thereof.

In some embodiments, the phosphorus flame retardant may comprise about 50 wt% to about 70 wt%, for example, about 55 wt% to about 65 wt%, of bisphenol-A bis(diphenyl phosphate) and about 30 wt% to about 50 wt%, for example, about 35 wt% to about 45 wt%, of biphenol bis(diphenyl phosphate). Within this range, the phosphorus flame retardant can improve flame retardancy without deterioration in other properties of the polycarbonate resin composition.

In the present invention, the phosphorus flame retardant is present in an amount of about 5 parts by weight to about 30 parts by weight, for example, about 10 parts by weight to about 25 parts by weight, relative to about 100 parts by weight of the polycarbonate resin. Within this range, the polycarbonate resin composition can have good flame retardancy, low heat generation characteristics, and the like.

(F) Inorganic fillers

The inorganic fillers according to one embodiment of the invention serve to improve flame retardancy, low heat generation and low flammability characteristics while improving stiffness of the polycarbonate resin composition by preventing combustible resin decomposition products from exuding from a resin surface upon combustion of the polycarbonate resin composition, and may comprise typical flake inorganic fillers.

In some embodiments, the flake inorganic fillers may comprise talc, mica, and a combination thereof. For example, typical flake talc may be used. The flake inorganic fillers may have an average particle diameter of about 2 μm to about 10 μm, for example, about 3 μm to about 7 μm. Within this range, the polycarbonate resin composition can exhibit good properties in terms of flame retardancy, stiffness, flowability, external appearance, and the like.

In some embodiments, the inorganic fillers may further comprise typical acicular inorganic fillers, for example, wollastonite, whisker, glass fibers, basalt fibers, and combinations thereof, in addition to the flake inorganic fillers. For example, wollastonite may be used.

In some embodiments, the acicular inorganic fillers may be present in an amount of about 10 parts by weight to about 50 parts by weight, for example, about 20 parts by weight to about 40 parts by weight, relative to about 100 parts by weight of the flake inorganic fillers. Within this range, the polycarbonate resin composition can have good dimensional stability.

In the present invention, the inorganic fillers are present in an amount of about 10 parts by weight to about 60 parts by weight, for example, about 15 parts by weight to about 55 parts by weight, relative to about 100 parts by weight of the polycarbonate resin. Within this range, the polycarbonate resin composition can have good properties in terms of flame retardancy, stiffness, dimensional stability, and the like.

In some embodiments, the polycarbonate resin composition may further comprise typical additives, as needed. Examples of the additives may comprise an anti-dripping agent, an antioxidant, a release agent, a lubricant, a nucleating agent, an antistatic agent, a UV stabilizer, pigments, dyes, and a mixture thereof. The additives may be present in an amount of about 0.001 parts by weight to about 10 parts by weight relative to about 100 parts by weight of the base resin.

The polycarbonate resin composition according to one embodiment of the invention may be prepared by a

typical method for preparing a polycarbonate resin composition, known in the art. For example, the aforementioned components and, optionally, other additives are mixed, followed by melt extrusion using a typical twin-screw extruder at about 200°C to about 300°C, for example, about 250°C to about 280°C, thereby preparing a polycarbonate resin composition in pellet form.

In some embodiments, the polycarbonate resin composition may have a flame retardancy of V-0 or higher, as measured on a 0.75 mm thick specimen in accordance with the UL-94 vertical test method.

In some embodiments, the polycarbonate resin composition may have a maximum average rate of heat emission (MARHE) of about 50 kW/$m^2$ to about 90 kW/$m^2$, for example, about 55 kW/$m^2$ to about 85 kW/$m^2$, as measured on specimens having sizes of 100 mm $\times$ 100 mm $\times$ 2 to 4 mm at a heat quantity of 50 kW/$m^2$ in accordance with the ISO 5660-1 standard.

In some embodiments, the polycarbonate resin composition may have a critical heat flux at extinguishment (CFE) of about 18 kW/$m^2$ to about 30 kW/$m^2$, for example, about 20 kW/$m^2$ to about 25 kW/$m^2$, as measured on specimens having sizes of 800 mm $\times$ 150 mm $\times$ 2 to 4 mm at a heat quantity of 50 kW/$m^2$ in accordance with the ISO 5658-2 standard.

In some embodiments, the polycarbonate resin composition may have a specific optical density at 4 min (Ds(4)) of about 90 to about 300, for example, about 95 to about 250, as measured on specimens having sizes of 75 mm $\times$ 75 mm $\times$ 2 to 4 mm at a heat quantity of 25 kW/$m^2$ in accordance with the ISO 5659-2 standard.

In some embodiments, the polycarbonate resin composition may have a cumulative value of specific optical densities in the fires 4 min of the test (VOF(4)) of about 110 min to about 600 min, for example, about 120 min to about 400 min, as measured on specimens having sizes of 75 mm $\times$ 75 mm $\times$ 2 to 4 mm at a heat quantity of 25 kW/$m^2$ in accordance with the ISO 5659-2 standard.

In some embodiments, the polycarbonate resin composition may have a conventional index of toxicity (CIT) of about 0.005 to about 0.9 (a.u. (unit)), for example, about 0.01 to about 0.2, as measured on specimens having sizes of 75 mm $\times$ 75 mm $\times$ 2 to 4 mm at a heat quantity of 25 kW/$m^2$ in accordance with the ISO 5659-2 standard.

In some embodiments, the polycarbonate resin composition may have a notched Izod impact strength of about 2 kgf·cm/cm to about 15 kgf·cm/cm, for example, about 4 kgf·cm/cm to about 8 kgf cm/cm, as measured on a 3.2 mm thick specimen in accordance with ASTM D256.

A molded article according to the present invention is formed of the polycarbonate resin composition set forth above. For example, the polycarbonate resin composition may be produced into various molded articles (products) by various molding methods, such as injection molding, extrusion molding, vacuum molding, and casting. These molding methods are well known to those skilled in the art. The molded product has good flame retardancy, low heat generation characteristics, low flammability, does not have smoke toxicity, satisfies European Union Standard Fire Testing to Railway Vehicle Components EN45545-2 R1HL2, and is particularly useful as a material for interior or exterior materials of transportation equipment, such as automobile component or railway vehicle components.

[Mode for Invention]

Next, the present invention will be described in more detail with reference to some examples. It should be understood that these examples are provided for illustration only and are not to be in any way construed as limiting the present invention.

**EXAMPLE**

Details of components used in Examples and Comparative Examples are as follows:

(A) Polycarbonate resin
A bisphenol-A polycarbonate resin (weight average molecular weight (Mw): 28,000 g/mol) was used.
(B) Polysiloxane-polycarbonate copolymer resin
A polysiloxane-polycarbonate copolymer resin comprising 20 wt% of polydimethylsiloxane (PDMS) and having a melt flow index (MI, 300°C, 1.2 kgf, ISO 1133) of 25 g/10 min was used.
(C1) Silicone gum
Polydimethylsiloxane (PDMS) silicone gum (Manufacturer: Momentive Inc., Product Name: SE-72) having a viscosity of 10,000 to 25,000 $mm^2$/s, as measured using a Brookfield viscometer, was used.
(C2) Silicone-based core-shell impact modifier
A silicone-based core-shell impact modifier (Manufacturer: MRC, Product Name: SX-005) was used.
(D) Inorganic metal compound
(D1) Zinc borate (anhydride) (Manufacturer: Rio Tinto Minerals Inc., Product Name: Firebrake 500) was used.
(D2) Zinc borate hydrate (Manufacturer: Rio Tinto Minerals Inc., Product Name: Firebrake 415) was used.

(E) Flame retardant

(E1) As a phosphorus flame retardant, bisphenol-A bis(diphenyl phosphate) (Manufacturer: Daihachi Inc., Product Name: CR-741) was used.

(E2) As a phosphorus flame retardant, biphenol bis(diphenyl phosphate) (Manufacturer: Adeka Inc., Product Name: FP-900) was used.

(E3) As a halogen flame retardant, tetrabromo bisphenol-A carbonate oligomer (Manufacturer: Great Lakes Inc., Product Name: BC-58) was used.

(F) Inorganic fillers

(F1) Talc (Manufacturer: Imi-Fabi Inc., Product Name: HTP05L) was used.

(F2) Wollastonite (Manufacturer: Imerys Inc., Product Name: NYGLOS 4W) was used.

**Examples 1 to 4 and Comparative Examples 1 to 3: Preparation and evaluation of polycarbonate resin composition**

The aforementioned components were mixed in amounts as listed in Table 1, and 1 part by weight of an anti-dripping agent, 0.2 parts by weight of an antioxidant agent (Songwon Industry Inc., SONGNOX-1076, and Miwon Industry Inc., ALKANOX 240), and 0.3 parts by weight of a release agent (Hengel, LOXIOL EP-861) relative to 100 parts by weight of the components were added to the mixture, followed by extrusion at 280°C, thereby preparing a polycarbonate resin composition in pellet form. Here, extrusion was performed using a twin-screw extruder (L/D: 36, Φ: 45 mm). The prepared pellets were dried at 80°C for 4 hours or more and then subjected to injection molding using a 120 ton injection machine (molding temperature: 280°C, mold temperature: 80°C), thereby preparing a specimen. The specimen was evaluated by the following method and results are shown in Table 1.

Property Evaluation

(1) Flame retardancy: Flame retardancy was measured on a 0.75 mm thick specimen in accordance with the UL-94 vertical test method.

(2) MARHE (unit: kW/m$^2$): Maximum average rate of heat emission (MARHE) was measured on specimens having sizes of 100 mm × 100 mm × 2, 3 and 4 mm at a heat quantity of 50 kW/m$^2$ in accordance with the ISO 5660-1 standard (cone calorimeter method).

(3) CFE (unit: kW/m$^2$): Critical heat flux at extinguishment (CFE) was measured on specimens having sizes of 800 mm × 150 mm × 2, 3 and 4 mm at a heat quantity of 50 kW/m$^2$ in accordance with the ISO 5658-2 standard (lateral flame spreading method).

(4) Ds(4) (no unit): Specific optical density at 4 min (Ds(4)) was measured on specimens having 75 mm × 75 mm × 2, 3 and 4 mm at a heat quantity of 25 kW/m$^2$ in a smoke density chamber in accordance with the ISO 5659-2 standard.

$$Ds(4) = (V/A \times L) \log(100/T)$$

(V: volume of a test chamber, A: exposed area of a test specimen, L: length of light beam, T: relative transmittance of light at 4 minutes (%))

(5) VOF(4) (unit: min): Cumulative value of specific optical densities in the fires 4 min of the test (VOF(4)) was measured on specimens having 75 mm × 75 mm × 2, 3 and 4 mm at a heat quantity of 25 kW/m$^2$ in a smoke chamber in accordance with the ISO 5659-2 standard.

$$VOF(4) = [(Ds(1) + Ds(2) + Ds(3) + Ds(4))/2] \times 1 \text{ min}$$

(6) CIT (no unit): Conventional index of toxicity (CIT) was measured on specimens having sizes of 75 mm × 75 mm × 2 to 4 mm at a heat quantity of 25 kW/m$^2$ in accordance with the ISO 5659-2 standard.

(7) Notched Izod impact strength (unit: kgf·cm/cm): Notched Izod impact strength was measured on a 3.2 mm thick specimen in accordance with ASTM D256.

(8) Melt flow index (MI, unit: g/10 min): Melt flow index was measured under conditions of 300°C and 1.2 kgf in accordance with ASTM D1238.

(9) Vicat softening temperature (VST, unit: °C): Vicat softening temperature (VST) was measured under conditions

of a load of 50 N and a temperature raising rate 120°C/hr in accordance with ISO 306/B50.

Table 1

| | | Example | | | | Comparative Example | | | |
|---|---|---|---|---|---|---|---|---|---|
| | | 1 | 2 | 3 | 4 | 1 | 2 | 3 | 4 |
| (A) (wt%) | | 80 | 78 | 80 | 78 | 100 | 80 | 80 | 80 |
| (B) (wt%) | | 20 | 22 | 20 | 22 | - | 20 | 20 | 20 |
| (C1) (parts by weight) | | 8.5 | 9.3 | 8.5 | 9.3 | 8.5 | - | 8.5 | 8.5 |
| (C2) (parts by weight) | | - | - | - | - | - | 8.5 | - | - |
| (D) (parts by weight) | (D1) | 8.5 | 9.3 | - | - | 8.5 | 8.5 | - | 8.5 |
| | (D2) | - | - | 8.5 | 9.3 | - | - | - | - |
| (E) (parts by weight) | (E1) | 10.2 | 11.1 | 10.2 | 11.1 | 10.2 | 10.2 | 10.2 | - |
| | (E2) | 5.9 | 6.5 | 5.9 | 6.5 | 5.9 | 5.9 | 5.9 | - |
| | (E3) | - | - | - | - | - | - | - | 16.1 |
| (F) (parts by weight) | (F1) | 33.9 | 46.3 | 33.9 | 27.8 | 33.9 | 33.9 | 33.9 | 33.9 |
| | (F2) | - | - | - | 18.5 | - | - | - | - |
| Flame retardancy | | V-0 | V-0 | V-0 | V-0 | V-0 | V-0 | V-0 | V-0 |
| MARHE | 2 mm | 75 | 70 | 85 | 80 | 95 | 101 | 142 | 91 |
| | 3 mm | 70 | 67 | 81 | 78 | 102 | 115 | 158 | 104 |
| | 4 mm | 68 | 55 | 82 | 81 | 111 | 121 | 174 | 113 |
| CFE | 2 mm | 22 | 24 | 21 | 21 | 14 | 15 | 11 | 18 |
| | 3 mm | 21 | 23 | 20 | 21 | 13 | 14 | 10 | 16 |
| | 4 mm | 21 | 22 | 20 | 21 | 12 | 11 | 8 | 17 |
| Ds(4) | 2 mm | 200 | 185 | 235 | 220 | 310 | 295 | 450 | 1,150 |
| | 3 mm | 189 | 126 | 220 | 195 | 290 | 273 | 420 | 1,420 |
| | 4 mm | 175 | 95 | 207 | 180 | 210 | 205 | 395 | 1,650 |
| VOF(4) | 2 mm | 410 | 378 | 440 | 400 | 480 | 445 | 581 | 1,850 |
| | 3 mm | 198 | 158 | 201 | 189 | 330 | 295 | 450 | 2,120 |
| | 4 mm | 167 | 127 | 178 | 170 | 210 | 201 | 387 | 2,250 |
| CIT | 2 mm | 0.02 | 0.01 | 0.03 | 0.03 | 0.03 | 0.05 | 0.15 | 3.5 |
| | 3 mm | 0.02 | 0.01 | 0.02 | 0.02 | 0.02 | 0.1 | 0.14 | 4.1 |
| | 4 mm | 0.02 | 0.01 | 0.02 | 0.02 | 0.03 | 0.12 | 0.18 | 5.5 |
| Notched Izod impact strength | | 6 | 5 | 5 | 5 | 3 | 5 | 6 | 8 |
| MI | | 35 | 30 | 32 | 35 | 35 | 28 | 41 | 15 |
| VST | | 102 | 98 | 102 | 102 | 103 | 102 | 101 | 125 |
| * parts by weight: parts by weight relative to 100 parts by weight of base resin (A+B) | | | | | | | | | |

From the result, it could be seen that the polycarbonate resin composition according to the present invention exhibited good properties in terms of flame retardancy, flame propagation characteristics (CFE), low heat generation characteristics (MARHE), low flammability (DS(4), VOF(4)), and smoke toxicity (CIT).

Conversely, the resin composition prepared without using the polysiloxane-polycarbonate copolymer resin (B) (Comparative Example 1) suffered from deterioration in low heat generation characteristics (MARHE), flame propagation

characteristics (CFE), and the like; the resin composition prepared using the silicone-based core-shell impact modifier (C2) (Comparative Example 2) instead of the silicone gum (C1) suffered from deterioration in low heat generation characteristics (MARHE), flame propagation characteristics (CFE), and the like; the resin composition prepared without using the inorganic metal compound (D) (Comparative Example 3) suffered from deterioration in low heat generation characteristics (MARHE), flame propagation characteristics (CFE), and the like; and the resin composition prepared using the halogen flame retardant (E3) (Comparative Example 4) instead of the phosphorus flame retardants (E1, E2) suffered from deterioration in low heat generation characteristics (MARHE), flame propagation characteristics (CFE), specific optical density at 4 min (Ds(4)), smoke accumulation for 4 minutes (VOF(4)), and smoke toxicity (CIT).

## Claims

**1.** A polycarbonate resin composition comprising:

100 parts by weight of a base resin comprising 70 wt% to 90 wt% of a polycarbonate resin and 10 wt% to 30 wt% of a polysiloxane-polycarbonate copolymer resin;
1 part by weight to 30 parts by weight of silicone gum;
1 part by weight to 20 parts by weight of an inorganic metal compound;
5 parts by weight to 30 parts by weight of a phosphorus flame retardant; and
10 parts by weight to 60 parts by weight of inorganic fillers,
wherein the silicone gum and the inorganic metal compound are present in a weight ratio (silicone gum:inorganic metal compound) of 0.5:1 to 1.5:1.

**2.** The polycarbonate resin composition according to claim 1, wherein the polysiloxane-polycarbonate copolymer resin is prepared through reaction of a siloxane compound represented by Formula 1, an aromatic dihydroxy compound, and a carbonate precursor:

[Formula 1]

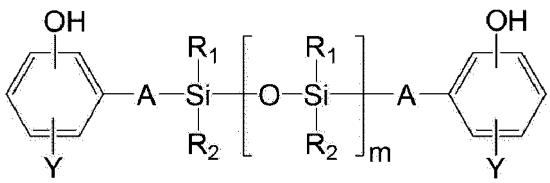

where $R_1$ and $R_2$ are each independently a $C_1$ to $C_{10}$ alkyl group, a $C_6$ to $C_{18}$ aryl group, or a halogen atom or alkoxy group-containing $C_1$ to $C_{10}$ alkyl group or $C_6$ to $C_{18}$ aryl group; As are each independently a substituted or unsubstituted $C_2$ to $C_{20}$ hydrocarbon group, or a substituted or unsubstituted $C_2$ to $C_{20}$ hydrocarbon group having -O- or -S-; Ys are each independently a hydrogen atom, a halogen atom, a $C_1$ to $C_{18}$ halogenated alkyl group, a cyano group (-CN), or an ester group; and m is an integer of 2 to 1,000.

**3.** The polycarbonate resin composition according to claim 1 or 2, wherein the silicone gum is a polysiloxane resin represented by Formula 2 and has a weight average molecular weight of 400,000 g/mol to 1,000,000 g/mol, measured as indicated in the specification, and a viscosity of 10,000 to 60,000 $mm^2/s$, as measured at 25°C using a Brookfield viscometer:

[Formula 2]

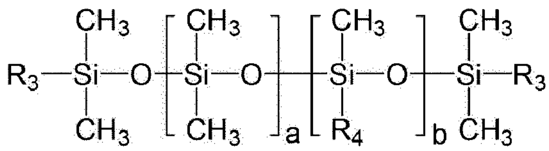

where $R_3$ is a methyl group, a vinyl group or a hydroxyl group, $R_4$ is a methyl group or a vinyl group, and a and b are a mole ratio of 1 to 99 and a mole ratio of 1 to 99, respectively.

4. The polycarbonate resin composition according to any one of claims 1 to 3, wherein the inorganic metal compound comprises at least one of zinc borate, zinc borate hydrate, aluminum hydroxide, magnesium hydroxide, calcium hydroxide, zinc sulfide, zinc oxide, titanium oxide, magnesium calcium carbonate, magnesium carbonate, calcium carbonate, and magnesium sulfate hydrate.

5. The polycarbonate resin composition according to any one of claims 1 to 4, wherein the phosphorus flame retardant comprises 50 wt% to 70 wt% of bisphenol-A bis(diphenyl phosphate) and 30 wt% to 50 wt% of biphenol bis(diphenyl phosphate).

6. The polycarbonate resin composition according to any one of claims 1 to 5, wherein the inorganic fillers comprise flake inorganic fillers.

7. The polycarbonate resin composition according to any one of claims 1 to 6, wherein the polycarbonate resin composition has a flame retardancy of V-0 or higher, as measured on a 0.75 mm thick specimen in accordance with a UL-94 vertical test method.

8. The polycarbonate resin composition according to any one of claims 1 to 7, wherein the polycarbonate resin composition has a maximum average rate of heat emission (MARHE) of 50 $kW/m^2$ to 90 $kW/m^2$, as measured on specimens having sizes of 100 mm $\times$ 100 mm $\times$ 2 to 4 mm at a heat quantity of 50 $kW/m^2$ in accordance with ISO 5660-1.

9. The polycarbonate resin composition according to any one of claims 1 to 8, wherein the polycarbonate resin composition has a critical heat flux at extinguishment (CFE) of 18 $kW/m^2$ to 30 $kW/m^2$, as measured on specimens having sizes of 800 mm $\times$ 150 mm $\times$ 2 to 4 mm at a heat quantity of 50 $kW/m^2$ in accordance with ISO 5658-2.

10. The polycarbonate resin composition according to any one of claims 1 to 9, wherein the polycarbonate resin composition has a specific optical density at 4 min (Ds(4)) of 90 to 300, as measured on specimens having sizes of 75 mm $\times$ 75 mm $\times$ 2 to 4 mm at a heat quantity of 25 $kW/m^2$ in accordance with ISO 5659-2.

11. The polycarbonate resin composition according to any one of claims 1 to 10, wherein the polycarbonate resin composition has a cumulative value of specific optical densities in the fires 4 min of the test (VOF(4)) of 110 min to 600 min, as measured on specimens having sizes of 75 mm $\times$ 75 mm $\times$ 2 to 4 mm at a heat quantity of 25 $kW/m^2$ in accordance with ISO 5659-2.

12. The polycarbonate resin composition according to any one of claims 1 to 11, wherein the polycarbonate resin composition has a conventional index of toxicity (CIT) of 0.005 to 0.9, as measured on specimens having sizes of 75 mm $\times$ 75 mm $\times$ 2 to 4 mm at a heat quantity of 25 $kW/m^2$ in accordance with ISO 5659-2.

13. A molded article formed of the polycarbonate resin composition according to any one of claims 1 to 12.

## Patentansprüche

1. Polycarbonatharz-Zusammensetzung, die Folgendes umfasst:

   100 Gewichtsteile eines Basisharzes, das 70 Gew.-% bis 90 Gew.-% eines Polycarbonatharzes und 10 Gew.-% bis 30 Gew.-% eines Polysiloxan-Polycarbonat-Copolymerharzes umfasst;
   1 Gewichtsteil bis 30 Gewichtsteile Silikongummi;
   1 Gewichtsteil bis 20 Gewichtsteile einer anorganischen Metallverbindung;
   5 Gewichtsteile bis 30 Gewichtsteile eines Phosphor-Flammschutzmittels; und
   10 Gewichtsteile bis 60 Gewichtsteile anorganische Füllstoffe,
   wobei das Silikongummi und die anorganische Metallverbindung in einem Gewichtsverhältnis (Silikongummi:anorganischen Metallverbindung) von 0,5:1 bis 1,5:1 vorliegen.

2. Polycarbonatharz-Zusammensetzung nach Anspruch 1, wobei das Polysiloxan-Polycarbonat-Copolymerharz durch Reaktion einer durch die Formel 1 dargestellten Siloxanverbindung, einer aromatischen Dihydroxyverbindung und eines Carbonatvorläufers hergestellt wird:

[Formel 1]

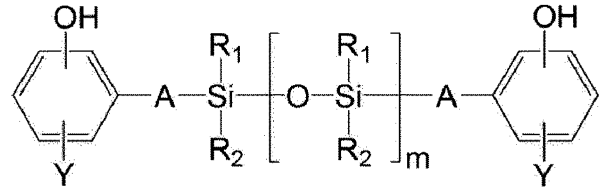

wobei $R_1$ und $R_2$ jeweils unabhängig voneinander eine $C_1$- bis $C_{10}$-Alkylgruppe, eine $C_6$- bis $C_{18}$-Arylgruppe oder eine ein Halogenatom oder eine Alkoxygruppe enthaltende $C_1$- bis $C_{10}$-Alkylgruppe oder $C_6$- bis $C_{18}$-Arylgruppe sind; As jeweils unabhängig voneinander eine substituierte oder unsubstituierte $C_2$- bis $C_{20}$-Kohlenwasserstoffgruppe oder eine substituierte oder unsubstituierte $C_2$- bis $C_{20}$-Kohlenwasserstoffgruppe mit -O- oder -S- sind; Ys jeweils unabhängig voneinander ein Wasserstoffatom, ein Halogenatom, eine halogenierte $C_1$- bis $C_{18}$-Alkylgruppe, eine Cyanogruppe (-CN) oder eine Estergruppe sind; und m eine ganze Zahl von 2 bis 1.000 ist.

3. Polycarbonatharz-Zusammensetzung nach Anspruch 1 oder 2, wobei das Silikongummi ein durch die Formel 2 dargestelltes Polysiloxanharz ist und ein durchschnittliches Molekulargewicht von 400.000 g/mol bis 1.000.000 g/mol, gemessen wie in der Beschreibung angegeben, und eine Viskosität von 10.000 bis 60.000 $mm^2/s$, gemessen bei 25 °C unter Verwendung eines Brookfield-Viskosimeters, aufweist:

[Formel 2]

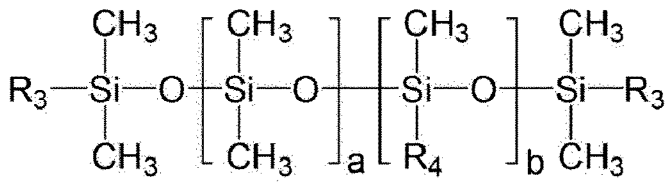

wobei $R_3$ eine Methylgruppe, eine Vinylgruppe oder eine Hydroxylgruppe ist, $R_4$ eine Methylgruppe oder eine Vinylgruppe ist, und a und b ein Molverhältnis von 1 bis 99 bzw. ein Molverhältnis von 1 bis 99 aufweisen.

4. Polycarbonatharz-Zusammensetzung nach einem der Ansprüche 1 bis 3, wobei die anorganische Metallverbindung mindestens eines von Zinkborat, Zinkborathydrat, Aluminiumhydroxid, Magnesiumhydroxid, Calciumhydroxid, Zinksulfid, Zinkoxid, Titanoxid, Magnesiumcalciumcarbonat, Magnesiumcarbonat, Calciumcarbonat und Magnesiumsulfathydrat umfasst.

5. Polycarbonatharz-Zusammensetzung nach einem der Ansprüche 1 bis 4, wobei das Phosphor-Flammschutzmittel 50 Gew.-% bis 70 Gew.-% Bisphenol-A-bis(diphenylphosphat) und 30 Gew.-% bis 50 Gew.-% Biphenol-bis(diphenylphosphat) umfasst.

6. Polycarbonatharz-Zusammensetzung nach einem der Ansprüche 1 bis 5, wobei die anorganischen Füllstoffe anorganische Flockenfüllstoffe umfassen.

7. Polycarbonatharz-Zusammensetzung nach einem der Ansprüche 1 bis 6, wobei die Polycarbonatharz-Zusammensetzung eine Flammhemmung von V-0 oder höher aufweist, gemessen an einer 0,75 mm dicken Probe gemäß einem UL-94-Vertikalbrennprüfungsverfahren.

8. Polycarbonatharz-Zusammensetzung nach einem der Ansprüche 1 bis 7, wobei die Polycarbonatharz-Zusammensetzung eine maximale durchschnittliche Wärmeemissionsrate (MARHE) von 50 $kW/m^2$ bis 90 $kW/m^2$ aufweist, gemessen an Proben mit einer Größe von 100 mm × 100 mm × 2 bis 4 mm bei einer Wärmemenge von 50 $kW/m^2$ gemäß ISO 5660-1.

9. Polycarbonatharz-Zusammensetzung nach einem der Ansprüche 1 bis 8, wobei die Polycarbonatharz-Zusammensetzung einen kritischen Wärmefluss bei der Löschung (CFE) von 18 $kW/m^2$ bis 30 $kW/m^2$ aufweist, gemessen an Proben mit einer Größe von 800 mm × 150 mm × 2 bis 4 mm bei einer Wärmemenge von 50 $kW/m^2$ gemäß ISO 5658-2.

**10.** Polycarbonatharz-Zusammensetzung nach einem der Ansprüche 1 bis 9, wobei die Polycarbonatharz-Zusammensetzung eine spezifische optische Dichte bei 4 Min. (Ds(4)) von 90 bis 300 aufweist, gemessen an Proben mit einer Größe von 75 mm × 75 mm × 2 bis 4 mm bei einer Wärmemenge von 25 kW/$m^2$ gemäß ISO 5659-2.

**11.** Polycarbonatharz-Zusammensetzung nach einem der Ansprüche 1 bis 10, wobei die Polycarbonatharz-Zusammensetzung einen kumulativen Wert der spezifischen optischen Dichten in den 4-minütigen Bränden des Tests (VOF(4)) von 110 Minuten bis 600 Minuten aufweist, gemessen an Proben mit Größen von 75 mm × 75 mm × 2 bis 4 mm bei einer Wärmemenge von 25 kW/$m^2$ gemäß ISO 5659-2.

**12.** Polycarbonatharz-Zusammensetzung nach einem der Ansprüche 1 bis 11, wobei die Polycarbonatharz-Zusammensetzung einen herkömmlichen Toxizitätsindex (CIT) von 0,005 bis 0,9 aufweist, gemessen an Proben mit Größen von 75 mm × 75 mm × 2 bis 4 mm bei einer Wärmemenge von 25 kW/$m^2$ gemäß ISO 5659-2.

**13.** Formgegenstand, der aus der Polycarbonatharz-Zusammensetzung nach einem der Ansprüche 1 bis 12 ausgebildet wird.

**Revendications**

**1.** Composition de résine de polycarbonate comprenant :

100 parties en poids d'une résine de base comprenant 70% en poids à 90% en poids d'une résine de polycarbonate et 10% en poids à 30% en poids d'une résine de copolymère polysiloxane-polycarbonate ;
1 partie en poids à 30 parties en poids de gomme de silicone ;
1 partie en poids à 20 parties en poids d'un composé métallique inorganique ;
5 parties en poids à 30 parties en poids d'un ignifuge au phosphore ; et
10 parties en poids à 60 parties en poids de charges inorganiques,
dans laquelle la gomme de silicone et le composé métallique inorganique sont présents dans un rapport pondéral (gomme de silicone : composé métallique inorganique) allant de 0,5:1 à 1,5:1.

**2.** Composition de résine de polycarbonate selon la revendication 1, dans laquelle la résine de copolymère polysiloxane-polycarbonate est préparée par une réaction d'un composé siloxane représenté par la formule 1, d'un composé dihydroxy aromatique et d'un précurseur de carbonate :

[Formule 1]

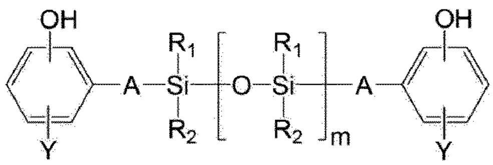

où $R_1$ et $R_2$ sont chacun indépendamment un groupe alkyle en $C_1$ à $C_{10}$, un groupe aryle en $C_6$ à $C_{18}$, ou un atome d'halogène ou un groupe alkyle en $C_1$ à $C_{10}$ ou un groupe aryle en $C_6$ à $C_{18}$ contenant un groupe alcoxy ; A sont chacun indépendamment un groupe hydrocarboné en $C_2$ à $C_{20}$ substitué ou non substitué, ou un groupe hydrocarboné en $C_2$ à $C_{20}$ substitué ou non substitué ayant -O- ou -S- ; Y sont chacun indépendamment un atome d'hydrogène, un atome d'halogène, un groupe alkyle halogéné en $C_1$ à $C_{18}$, un groupe cyano (-CN) ou un groupe ester ; et m est un nombre entier allant de 2 à 1000.

**3.** Composition de résine de polycarbonate selon la revendication 1 ou 2, dans laquelle la gomme de silicone est une résine de polysiloxane représentée par la formule 2 et a une masse moléculaire moyenne en poids allant de 400000 g/mol à 1000000 g/mol, mesurée comme indiqué dans la description, et une viscosité allant de 10000 à 60000 $mm^2$/s, telle que mesurée à 25°C en utilisant un viscosimètre Brookfield :

[Formule 2]

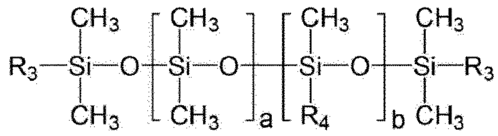

où $R_3$ est un groupe méthyle, un groupe vinyle ou un groupe hydroxyle, $R_4$ est un groupe méthyle ou un groupe vinyle, et a et b sont un rapport molaire allant de 1 à 99 et un rapport molaire allant de 1 à 99, respectivement.

**4.** Composition de résine de polycarbonate selon l'une quelconque des revendications 1 à 3, dans laquelle le composé métallique inorganique comprend au moins l'un parmi le borate de zinc, l'hydrate de borate de zinc, l'hydroxyde d'aluminium, l'hydroxyde de magnésium, l'hydroxyde de calcium, le sulfure de zinc, l'oxyde de zinc, l'oxyde de titane, le carbonate de magnésium et de calcium, le carbonate de magnésium, le carbonate de calcium et l'hydrate de sulfate de magnésium.

**5.** Composition de résine de polycarbonate selon l'une quelconque des revendications 1 à 4, dans laquelle l'ignifuge au phosphore comprend 50% en poids à 70% en poids de bisphénol-A bis(diphénylphosphate) et 30% en poids à 50% en poids de biphénol bis(diphénylphosphate).

**6.** Composition de résine de polycarbonate selon l'une quelconque des revendications 1 à 5, dans laquelle les charges inorganiques comprennent des charges inorganiques en paillettes.

**7.** Composition de résine de polycarbonate selon l'une quelconque des revendications 1 à 6, dans laquelle la composition de résine de polycarbonate a une ininflammabilité supérieure ou égale à V-0, telle que mesurée sur une éprouvette de 0,75 mm d'épaisseur conformément à une méthode de test vertical UL-94.

**8.** Composition de résine de polycarbonate selon l'une quelconque des revendications 1 à 7, dans laquelle la composition de résine de polycarbonate a un taux moyen maximal d'émission de chaleur (MARHE) allant de 50 $kW/m^2$ à 90 $kW/m^2$, tel que mesuré sur des éprouvettes ayant des tailles de 100 mm $\times$ 100 mm $\times$ 2 à 4 mm à une quantité de chaleur de 50 $KW/m^2$ conformément à la norme ISO 5660-1.

**9.** Composition de résine de polycarbonate selon l'une quelconque des revendications 1 à 8, dans laquelle la composition de résine de polycarbonate a un flux thermique critique à l'extinction (CFE) allant de 18 $kW/m^2$ à 30 $kW/m^2$, tel que mesuré sur des éprouvettes ayant des tailles de 800 mm $\times$ 150 mm $\times$ 2 à 4 mm à une quantité de chaleur de 50 $KW/m^2$ conformément à la norme ISO 5658-2.

**10.** Composition de résine de polycarbonate selon l'une quelconque des revendications 1 à 9, dans laquelle la composition de résine de polycarbonate a une densité optique spécifique à 4 min (Ds(4)) allant de 90 à 300, telle que mesurée sur des éprouvettes ayant des tailles de 75 mm $\times$ 75 mm $\times$ 2 à 4 mm à une quantité de chaleur de 25 $KW/m^2$ conformément à la norme ISO 5659-2.

**11.** Composition de résine de polycarbonate selon l'une quelconque des revendications 1 à 10, dans laquelle la composition de résine de polycarbonate a une valeur cumulée de densités optiques spécifiques dans les 4 premières minutes du test (VOF(4)) allant de 110 min à 600 min, telle que mesurée sur des éprouvettes ayant des tailles de 75 mm $\times$ 75 mm $\times$ 2 à 4 mm à une quantité de chaleur de 25 $KW/m^2$ conformément à la norme ISO 5659-2.

**12.** Composition de résine de polycarbonate selon l'une quelconque des revendications 1 à 11, dans laquelle la composition de résine de polycarbonate a un indice de toxicité conventionnel (CIT) allant de 0,005 à 0,9, tel que mesuré sur des éprouvettes ayant des tailles de 75 mm $\times$ 75 mm $\times$ 2 à 4 mm à une quantité de chaleur de 25 $KW/m^2$ conformément à la norme ISO 5659-2.

**13.** Article moulé formé de la composition de résine de polycarbonate selon l'une quelconque des revendications 1 à 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020120078559
- US 2013313493 A1
- WO 2017042271 A1